(19) **Europäisches Patentamt / European Patent Office / Office européen des brevets**

(11) **EP 3 933 810 B1**

(12) **FASCICULE DE BREVET EUROPEEN**

(45) Date de publication et mention
de la délivrance du brevet:
**14.02.2024 Bulletin 2024/07**

(21) Numéro de dépôt: **21183488.2**

(22) Date de dépôt: **02.07.2021**

(51) Classification Internationale des Brevets (IPC):
**G08G 5/00** *(2006.01)* **G01C 23/00** *(2006.01)*
**G01C 21/20** *(2006.01)*

(52) Classification Coopérative des Brevets (CPC):
**G08G 5/0021; G01C 21/20; G08G 5/0039;**
**G08G 5/006; G08G 5/0086; G08G 5/0091**

(54) **PROCÉDÉ DE DÉTERMINATION DE TRAJECTOIRES DE DÉROUTEMENT D'UN AÉRONEF**

VERFAHREN ZUR BESTIMMUNG VON BYPASS-FLUGBAHNEN FÜR EIN FLUGZEUG

METHOD FOR DETERMINING THE DIVERSION TRAJECTORIES OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.07.2020 FR 2006997**

(43) Date de publication de la demande:
**05.01.2022 Bulletin 2022/01**

(73) Titulaire: **THALES**
**92400 Courbevoie (FR)**

(72) Inventeurs:
• **THIRIET, Aurélien**
**33700 MERIGNAC (FR)**
• **DIAZ PINEDA, Jaime**
**33700 MERIGNAC (FR)**
• **GAYRAUD, Lionel**
**91767 PALAISEAU (FR)**

(74) Mandataire: **Lavoix**
**2, place d'Estienne d'Orves**
**75441 Paris Cedex 09 (FR)**

(56) Documents cités:
**EP-A1- 3 594 870     US-A1- 2018 366 011**

**Description**

La présente invention concerne un procédé de détermination de trajectoires de déroutement d'un aéronef par rapport à une trajectoire principale définie pour l'aéronef dans un environnement. La présente invention concerne aussi une installation électronique associée. La présente invention concerne également un aéronef comprenant une telle installation électronique.

Dans le domaine de l'aéronautique, un pilote peut être amené à rencontrer des situations imprévues, telles qu'une menace, une panne ou des conditions météorologiques dégradées.

Aussi, pour mener à bien sa mission et assurer sa survie et celle de son équipage, le pilote prépare sa mission en amont de sorte à définir une trajectoire principale et des alternatives de trajectoires en cas de situations imprévues. En particulier, au cours de cette phase de préparation, le pilote définit des zones de sécurité potentielles et réfléchit en amont à la manière de les atteindre tout au long de la trajectoire principale. Pour cela, il essaye d'imaginer des risques inattendus sur sa trajectoire pour se projeter sur la façon de rejoindre une zone de sécurité (masquage terrain, vallée, nuages).

Cependant, du fait de données incomplètes, du manque d'information sur les menaces potentielles ou de contremesures de détection déployées sur le terrain, le déroulement de la mission est affecté d'un haut degré d'incertitude.

Ainsi, une fois dans l'action, lorsque le pilote se retrouve dans une zone de danger, il devra envisager de façon réactive la meilleure manière d'atteindre une zone de sécurité selon ses compétences, sa connaissance de l'environnement, son intuition et ses techniques de survie.

Une telle pratique réside donc dans la capacité du pilote à identifier une zone de sécurité, et la route à suivre pour lui permettre d'atteindre cette zone, à chaque moment de la trajectoire sans augmenter le risque produit par la situation imprévue. Cette pratique présente donc des limites dans la mesure où la moindre défaillance du pilote est susceptible de lui être fatale.

Il est notamment noté, selon le modèle de conscience de la situation proposé par Endsley en 1988, qu'une bonne prise de décision demande une bonne compréhension de la situation et une gestion adéquate de l'urgence de la décision. Cependant, une bonne conscience de la situation n'est pas suffisante pour assurer une bonne prise de décision. Par exemple, Endsley en 1995 a identifié que dans 27% des accidents aéronautiques, les pilote avaient une bonne conscience de la situation, et ont malgré tout pris une mauvaise décision. La raison principale en est des environnements très complexes ou des ressources cognitives limitées par le temps de décision ou les contraintes de la situation (conditions de stress).

En particulier, la prise de décisions avec des opérateurs expérimentés n'est généralement pas un problème quand la situation est connue et bien définie. Cependant, quand la situation est complètement nouvelle et incertaine, la prise de décisions, même pour des opérateurs expérimentés, est difficile. De plus, quand la survie est en jeu, l'instinct pousse à s'éloigner de la menace, parfois en ajoutant des nouveaux dangers avec un risque de dégrader les chances de survie.

Les documents US 2018/366011 A et EP 3 594 870 A décrivent des exemples de procédé de détermination de trajectoires.

Il existe donc un besoin pour un procédé permettant d'améliorer la prise de décision d'un pilote face à des situations imprévues. L'invention est définie par les revendications indépendantes. D'autres aspects avantageux de l'invention sont décrits par les revendications dépendantes.

A cet effet, la présente description a pour objet un procédé de détermination de trajectoires de déroutement d'un aéronef par rapport à une trajectoire principale définie pour l'aéronef dans un environnement, le procédé étant mis en oeuvre par une installation électronique, le procédé comprenant une phase de préparation comprenant les étapes suivantes :

- l'obtention d'une image de l'environnement destiné à être survolé par l'aéronef entre un point de départ et un point d'arrivée, une représentation des éléments suivants ayant été ajoutée sur l'image :

  ∘ une trajectoire principale destinée à être parcourue par l'aéronef entre le point de départ et le point d'arrivée,
  ∘ au moins un point de déroutement de l'aéronef en dehors de la trajectoire principale, chaque point de déroutement étant un point de l'environnement à l'écart de la trajectoire principale et donnant accès à une zone de sécurité, une zone de sécurité étant une zone à l'écart d'un danger potentiel identifié le long de la trajectoire principale,

- le maillage de l'image en zones élémentaires,
- la détermination, pour chaque zone élémentaire de l'image, d'une valeur de coût en fonction d'au moins un critère de coût, le au moins un critère de coût étant relatif au survol de l'environnement par l'aéronef,
- l'échantillonnage de la trajectoire principale pour obtenir des points de trajectoire, et

- pour chaque point de déroutement,

  ◦ la détermination, en fonction des valeurs de coût déterminées pour les zones élémentaires, de distances de coût entre le point de déroutement et un ensemble de zones élémentaires de l'image pour obtenir une carte de distances,
  ◦ pour chaque point de trajectoire compris dans l'ensemble de zones élémentaires, la détermination, en fonction de la carte de distances, de la trajectoire de coût minimal reliant ledit point de trajectoire au point de déroutement, la trajectoire déterminée étant appelée trajectoire de déroutement.

- le procédé comprend une phase d'exploitation au cours de laquelle l'aéronef survole l'environnement en suivant initialement la trajectoire principale, la phase d'exploitation comprenant :

  ◦ la détermination en temps réel de la position de l'aéronef, et
  ◦ l'affichage, sur un afficheur, d'une image de l'environnement survolé par l'aéronef, une représentation des éléments suivants ayant été ajoutée sur l'image affichée :

    ▪ la trajectoire principale de l'aéronef,
    ▪ un ou plusieurs des points de déroutement, lesdits points de déroutement ajouté(s) étant fonction de la position du ou desdits points de déroulement par rapport à la position de l'aéronef déterminée en temps réel, et
    ▪ la trajectoire de déroutement déterminée entre chaque point de déroutement représenté sur l'image et le point de trajectoire le plus proche dans le sens du vol de l'aéronef de la position de l'aéronef déterminée en temps réel ;

Selon d'autres aspects avantageux de l'invention, le procédé comprend une ou plusieurs des caractéristiques suivantes, prises isolément ou suivant toutes les combinaisons techniquement possibles:

- la phase d'exploitation comprend une étape de déroutement de l'aéronef en dehors de la trajectoire principale, en fonction des trajectoires de déroutement représentées sur l'image affichée par l'afficheur ;
- l'étape d'affichage comprend le classement en temps réel des points de déroutement par ordre croissant de la distance-coût entre chaque point de déroutement et le point de trajectoire le plus proche dans le sens du vol de l'aéronef de la position de l'aéronef déterminée en temps réel, le classement étant indiqué sur l'image affichée ;
- la détermination d'une valeur de coût pour chaque zone élémentaire est effectuée en fonction de plusieurs critères de coût, ladite étape de détermination comprenant pour chaque zone élémentaire :

  ◦ la détermination d'une valeur intermédiaire de coût pour chaque critère de coût, et
  ◦ la combinaison linéaire des valeurs intermédiaires de coût déterminées pour obtenir la valeur de coût de la zone élémentaire ;

- l'environnement comprend au moins une zone de relief et/ou au moins une zone de danger et/ou au moins une zone d'intervisibilité pour un capteur et/ou au moins une zone de météo défavorable et/ou au moins une zone urbaine, le ou au moins un critère de coût étant choisi dans la liste constituée de :

  ◦ un critère d'évitement des zones de relief par l'aéronef,
  ◦ un critère d'évitement des zones de danger par l'aéronef,
  ◦ un critère d'évitement des zones d'intervisibilité d'un capteur par l'aéronef,
  ◦ un critère d'évitement des zones de météo défavorable par l'aéronef, et
  ◦ un critère d'évitement des zones urbaines par l'aéronef ;

- la carte de distances de chaque point de déroutement est déterminée par un algorithme de propagation Eikonale ;
- lors de l'étape d'obtention, l'image de l'environnement est obtenue par l'intermédiaire de mesures effectuée par un capteur, tel qu'une caméra ou un satellite.

La présente description concerne, en outre, une installation électronique configurée pour mettre en oeuvre un procédé de détermination tel que décrit précédemment.
La présente description concerne aussi un aéronef comprenant une installation électronique telle que décrite précédemment.
La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé de détermination tel que précédemment décrit lorsque le programme d'ordinateur est mis en oeuvre sur l'unité de traitement des données.

La présente description concerne aussi un support lisible d'informations sur lequel est mémorisé un produit programme d'ordinateur tel que précédemment décrit.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique d'une image d'un environnement destiné à être survolé par un aéronef, l'environnement comprenant des zones de danger et des zones de relief, l'image comprenant une représentation d'une trajectoire principale destinée à être suivie par l'aéronef et une représentation de points de déroutement en dehors de la trajectoire principale,
- [Fig 2] figure 2, une représentation schématique d'un exemple d'un calculateur d'une installation électronique,
- [Fig 3] figure 3, un organigramme d'un exemple d'un procédé de détermination de trajectoires de déroutement,
- [Fig 4] figure 4, un exemple de cartes de coût unitaires et de la carte de coût résultant de l'agrégation des cartes de coût unitaires,
- [Fig 5] figure 5, un exemple d'une carte de coût de dangers appliquée à l'image de la figure 1,
- [Fig 6] figure 6, un exemple d'une carte de coût de reliefs appliquée à l'image de la figure 1,
- [Fig 7] figure 7, un exemple de la carte de coût résultant de l'agrégation des cartes de coût de dangers et de reliefs illustrées respectivement sur les figures 5 et 6,
- [Fig 8] figure 8, un exemple d'une carte de distances obtenue en propageant une équation Eikonale depuis un point A,
- [Fig 9] figure 9, un exemple de la trajectoire de coût minimal obtenue depuis des points C1, C2, C3 de la zone considérée au point A de la carte de distances de la figure 8, et
- [Fig 10] figure 10, une représentation schématique de l'image de la figure 1 avec les trajectoires de déroutement obtenues pour chaque point de point de déroutement.

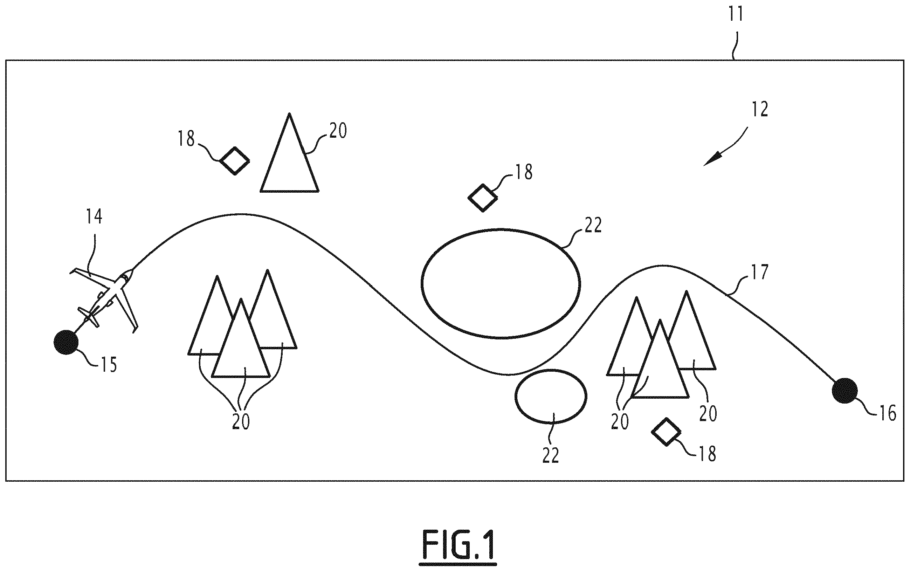

Une image 11 (ou cartographie) d'un environnement 12 destiné à être survolé par un aéronef 14 entre un point de départ 15 et un point d'arrivée 16 est illustrée par la figure 1. L'image 11 comprend, également, une représentation d'une trajectoire principale 17 destinée à être suivie par l'aéronef 14 entre le point de départ 15 et le point d'arrivée 16 et une représentation d'au moins un point de déroutement 18 de l'aéronef 14 en dehors de la trajectoire principale 17. Les représentations de la trajectoire principale 17 et du ou des points de déroutement 18 ont été ajoutées préalablement sur l'image 11, par exemple, par un opérateur.

L'environnement 12 est, par exemple, un environnement comprenant des montagnes, des plaines, des vallées ou encore des forêts.

Dans l'exemple illustré par la figure 1, l'environnement 12 comprend des zones de relief 20 et des zones de danger 22.

Les zones de relief 20 sont des zones d'élévation par rapport au sol. Les zones de relief 20 comprennent, par exemple, au moins un élément parmi : une plaine, un plateau et une montagne.

Les zones de danger 22 sont des zones comprenant des menaces susceptibles de perturber le vol de l'aéronef 14. Les menaces sont, par exemple, des zones difficiles à survoler pour le pilote, des zones urbaines à ne pas survoler, des zones potentiellement soumises à des fumées de feu de forêt, ou encore des zones où la météo est incertaine et potentiellement dangereuse.

L'homme du métier comprendra que le nombre de zones de relief 20 et de zones de danger 22 est dépendant de l'environnement 12 survolé, un environnement 12 étant susceptible de comprendre aucune ou une pluralité de zones de relief 20 et de zones de danger 20. En outre, l'homme du métier comprendra que l'environnement 12 est susceptible de comprendre d'autres types de zones, notamment des zones d'intervisibilité pour un capteur, c'est-à-dire des zones dans lesquelles un capteur est propre à acquérir des données en tous points de la zone. Le capteur est, par exemple, une caméra.

La trajectoire principale 17 a été définie au préalable en fonction de l'environnement 12, notamment des éventuelles zones de relief 20, de danger 22 et/ou d'intervisibilité pour un capteur. La trajectoire principale 17 a, par exemple, été définie par le pilote de l'aéronef 14 ou par un autre opérateur lors d'une phase de préparation d'une mission.

Chaque point de déroutement 18 est un point de l'environnement 12 à l'écart de la trajectoire principale 17 et donnant accès à une zone de sécurité. Une zone de sécurité est une zone à l'écart d'un danger potentiel identifié le long de la trajectoire principale 17.

Chaque point de déroutement 18 a été définie au préalable en fonction de l'environnement 12, notamment des éventuelles zones de relief 20, de danger 22 et/ou d'intervisibilité d'un capteur. Chaque point de déroutement 18 a, par exemple, été défini par le pilote de l'aéronef 14 ou par un autre opérateur lors d'une phase de préparation d'une mission.

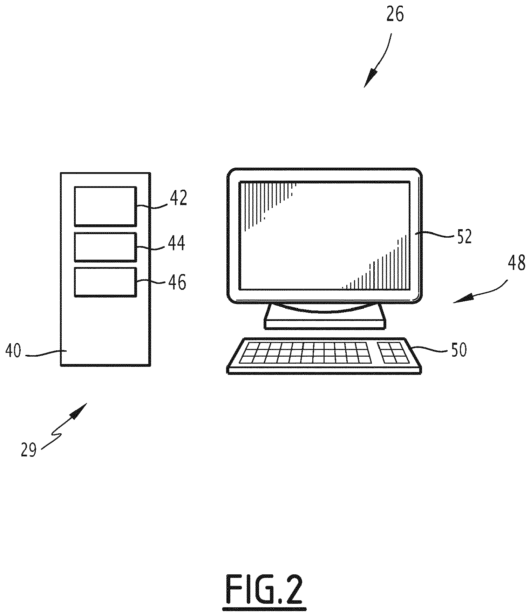

Un exemple d'une installation électronique 26 configurée pour déterminer des trajectoires de déroutement de l'aéronef 14 par rapport à la trajectoire principale 17 est illustré par la figure 2.

Dans l'exemple illustré par la figure 2, l'installation électronique 26 comprend un calculateur 29, tel qu'un ordinateur.

Dans l'exemple illustré par la figure 2, le calculateur 29 comprend un processeur 40 comprenant une unité de traitement de données 42, des mémoires 44, un lecteur de support d'information 46 et, optionnellement, une interface homme-machine 48 comprenant un clavier 50 et un afficheur 52.

L'unité de traitement 42 est en interaction avec un produit programme d'ordinateur. Le produit programme d'ordinateur comporte un support d'information. Le support d'information est un support lisible par l'unité de traitement 42. Le support lisible d'information est un medium adapté à mémoriser des instructions électroniques et capable d'être couplé à un bus d'un système informatique.

A titre d'exemple, le support d'informations est une clé USB, une disquette ou disque souple (de la dénomination anglaise « Floppy disc »), un disque optique, un CD-ROM, un disque magnéto-optique, une mémoire ROM, une mémoire RAM, une mémoire EPROM, une mémoire EEPROM, une carte magnétique ou une carte optique.

Sur le support d'information est mémorisé le programme d'ordinateur comprenant des instructions de programme.

Le programme d'ordinateur est chargeable sur l'unité de traitement de données 42 et est adapté pour entraîner la mise en oeuvre d'un procédé de détermination qui sera décrit dans la suite de la description.

Dans un autre exemple, le calculateur 29 est réalisé sous la forme d'un ou plusieurs composants logiques programmables, tel que des FPGA (de l'anglais Field Programmable Gate Array), ou encore sous la forme d'un ou plusieurs circuits intégrés dédiés, tel que des ASIC (de l'anglais Application Spécifie Integrated Circuit). Le calculateur 29 est dans ce cas configuré pour mettre en oeuvre un procédé de détermination comme cela sera décrit dans la suite de la description.

L'installation électronique 26 est, par exemple, intégralement intégrée dans l'aéronef 14.

En variante, l'installation électronique 26 est, par exemple, disposée en partie dans une unité au sol et en partie dans l'aéronef 14. Dans ce cas, l'installation électronique 26 comprend, par exemple, un premier calculateur 29 au sol (configuré pour mettre en oeuvre la phase de préparation décrite ci-après) et un deuxième calculateur 29 intégré dans l'aéronef (configuré pour mettre en oeuvre la phase d'exploitation décrite ci-après).

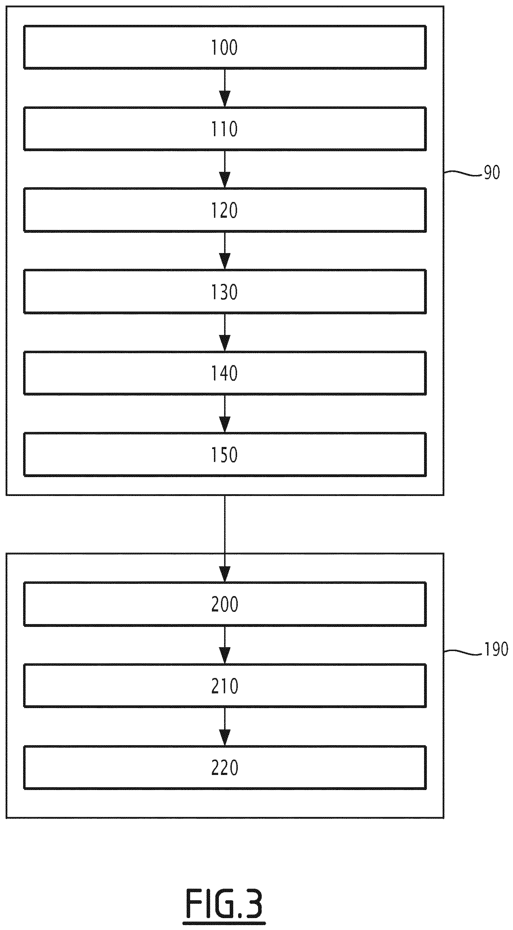

Le fonctionnement de l'installation électronique 26 va maintenant être décrit en référence à l'organigramme de la figure 3 qui illustre différentes étapes de mise en oeuvre d'un procédé de détermination de trajectoires de déroutement d'un aéronef 14.

Le procédé de détermination comprend une phase de préparation 90 et une phase d'exploitation 190 (facultative). Les deux phases sont mises en oeuvre par l'installation électronique 26, c'est-à-dire sont mises en oeuvre par ordinateur.

La phase de préparation 90 est, avantageusement, mise en oeuvre en préparation du vol de l'aéronef 14 de sorte à définir en amont les trajectoires de déroutement. Dans ce cas, les trajectoires de déroutement déterminées sont mémorisées (par exemple dans une mémoire 44) en vue d'être chargées dans l'aéronef 14 afin d'être consultables par le pilote en vol. En particulier, une image 11 de l'environnement 12 comprenant des représentations de la trajectoire principale 17 et des trajectoires de déroutement déterminées à partir des différents points de déroutement 18 est, par exemple, mémorisée.

En variante ou en complément, la phase de préparation 90 est mise en oeuvre lors du vol de l'aéronef 14, par exemple, lorsque la trajectoire principale 17 de l'aéronef 14 a été modifiée. En effet, dans ce cas, les trajectoires de déroutement qui auraient été déterminées au préalable ne sont plus valables. La mise en oeuvre de la phase de préparation 90 permet alors de déterminer de nouvelles trajectoires de déroutement à partir de la trajectoire principale modifiée.

La phase d'exploitation 190 est une phase au cours de laquelle l'aéronef 14 survole l'environnement 12 en suivant au moins initialement la trajectoire principale 17. La phase d'exploitation 190 a donc lieu durant la mission effective de l'aéronef 14.

La phase de préparation 90 comprend une étape 100 d'obtention d'une image 11 de l'environnement 12 destiné à être survolé par l'aéronef 14. Un exemple d'une telle image 11 a été décrit précédemment, notamment en référence à la figure 1. L'image 11 a, par exemple, été obtenue au moyen de mesures effectuées par un ou des capteurs. Par exemple, l'image 11 a été acquise par une caméra, par exemple, lors du vol d'un aéronef portant la caméra. En variante, l'image 11 a été acquise par un système satellite ou transmise par une liaison de données externe.

La phase de préparation 90 comprend une étape 110 de maillage de l'image 11 en zones élémentaires, aussi appelées pixels.

Le maillage, aussi appelé grille, est le plus souvent régulier. On parle alors de grille non structurée. En variante, le maillage est irrégulier et forme ainsi une grille structurée. Le procédé en lui-même est agnostique du maillage choisi.

Le maillage comprend, par exemple, des zones élémentaires correspondant à des surfaces de 100 mètres par 100 mètres.

Le maillage est, par exemple, généré via un algorithme de Maubach. Un algorithme de Maubach affine localement un maillage, aussi appelé grille, jusqu'à satisfaction d'un critère sur le pas de grille local. Il s'agit généralement de concentrer les pixels dans certains types de zones dans lesquels on souhaite concentrer la précision des calculs. Typiquement, la concentration a lieu au voisinage immédiat de menaces ou de points d'intérêt.

La notion de zone élémentaire revêt différentes formes suivant le caractère isotrope ou anisotrope de la stratégie de coût décrite dans l'étape suivante du procédé :

- Dans le cas d'une stratégie de coût isotrope, une zone élémentaire est une portion de la zone géographique. Ce cas survient dans le cas de la génération de trajectoires via une stratégie de coût isotrope.
- Dans le cas d'une stratégie de coût anisotrope, une zone élémentaire est une portion de la zone géographique, associée à une information de dérivée temporelle. En effet, le coût en un point dépend alors des conditions dans lesquelles on traverse ce point. On associe alors à chaque point de la zone un nombre N de zones élémentaires, obtenus typiquement par des variations sur un cap et/ou une pente.

Dans la suite de la description, pour faciliter la compréhension, les exemples sont donnés dans le cas bidimensionnel et isotrope. Toutefois, l'homme du métier comprendra que le procédé se généralise de façon immédiate aux autres cas (tridimensionnel, N dimensions, et/ou anisotrope).

La phase de préparation 90 comprend une étape 120 de détermination, pour chaque zone élémentaire de l'image 11, d'une valeur de coût en fonction d'au moins un critère de coût.

Chaque critère de coût est relatif au survol de l'environnement 12 par l'aéronef 14. Plus précisément, chaque critère de coût est relatif aux contraintes rencontrées par l'aéronef pour survoler l'environnement.

Chaque critère de coût affecte un poids (valeur de coût ou pénalisation) différent aux zones élémentaires en fonction des caractéristiques de l'environnement 12 dans cette zone et à des paramètres de vol choisis pour l'aéronef 14.

Par exemple, au moins un critère de coût est relatif aux éventuelles zones de relief et/ou de danger et/ou d'intervisibilité pour un capteur. A cet effet, le ou au moins un critère de coût est choisi dans la liste constituée de : un critère d'évitement des zones de relief par l'aéronef 14, un critère d'évitement des zones de danger par l'aéronef 14 et un critère d'évitement des zones d'intervisibilité d'un capteur par l'aéronef 14. Avantageusement, au moins un critère de coût favorise le survol des vallées par l'aéronef 14. En variante ou en complément, au moins un critère de coût est relatif à la météo et/ou à la présence de zones urbaines. Plus généralement, les critères de coûts sont relatifs à des éléments sémantiques qui ont du sens opérationnellement pour le choix de la construction d'une route.

Avantageusement, lorsque plusieurs critères de coût sont considérés, l'étape de détermination 120 comprend, pour chaque zone élémentaire, la détermination, d'une valeur intermédiaire de coût correspondant à chaque critère de coût. L'étape de détermination 120 comprend ensuite la combinaison linéaire des valeurs intermédiaires de coût obtenues pour la zone élémentaire pour obtenir la valeur de coût (globale) de la zone élémentaire.

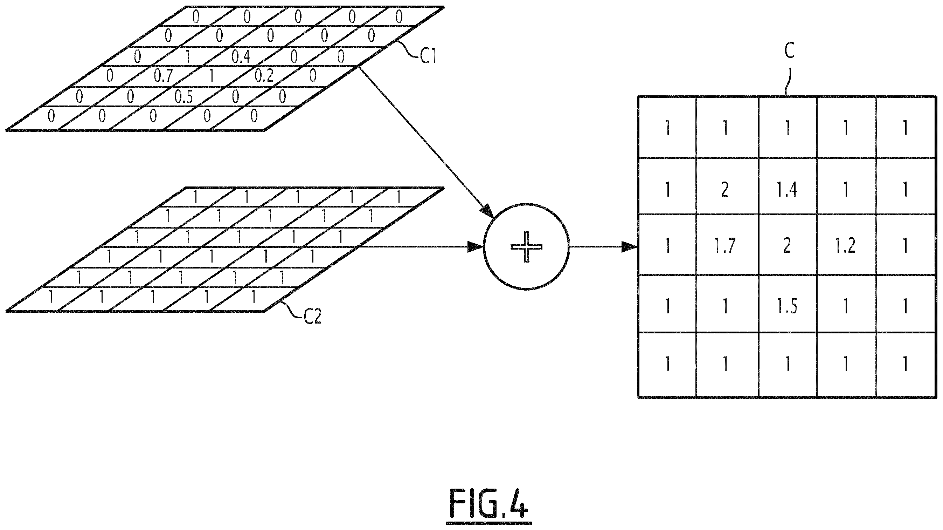

Un exemple de détermination de valeurs de coût est illustré par la figure 4. Dans cet exemple, il est considéré :

- une première stratégie de coût consistant à poser pour chaque pixel : $c_1$ = hauteur du sol à cette position de la carte (d'après un modèle numérique de terrain de la zone), et
- une deuxième stratégie de coût consistant à évaluer le danger associé à chaque pixel, par l'estimateur suivant : $c_2$ = zones de météo défavorable.

Une trajectoire optimale suivant le premier critère produira une trajectoire survolant les vallées. Une trajectoire optimale suivant le deuxième critère produira une trajectoire évitant les zones de météo défavorable.

Une stratégie de coût agrégée est définie de la façon suivante : $c = a \times c_1 + b \times c_2$ avec a et b des coefficients de combinaison linéaire donnant un poids éventuellement différent aux différentes cartes de coût. En faisant varier a et b, on obtient une série de stratégies de coût, qui à leur tour fournissent des trajectoires différentes. On accroît ainsi davantage la richesse topologique des solutions fournies. Il est à noter que bien que dans cet exemple, l'agrégation est réalisée par une combinaison linéaire, l'agrégation peut être réalisée de multiples façons, par exemple, via une combinaison non linéaire.

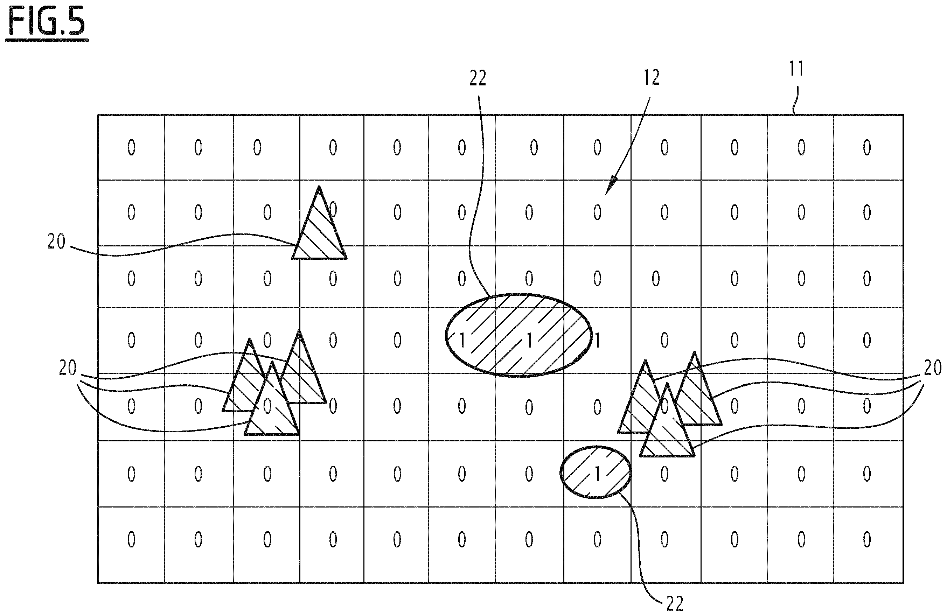

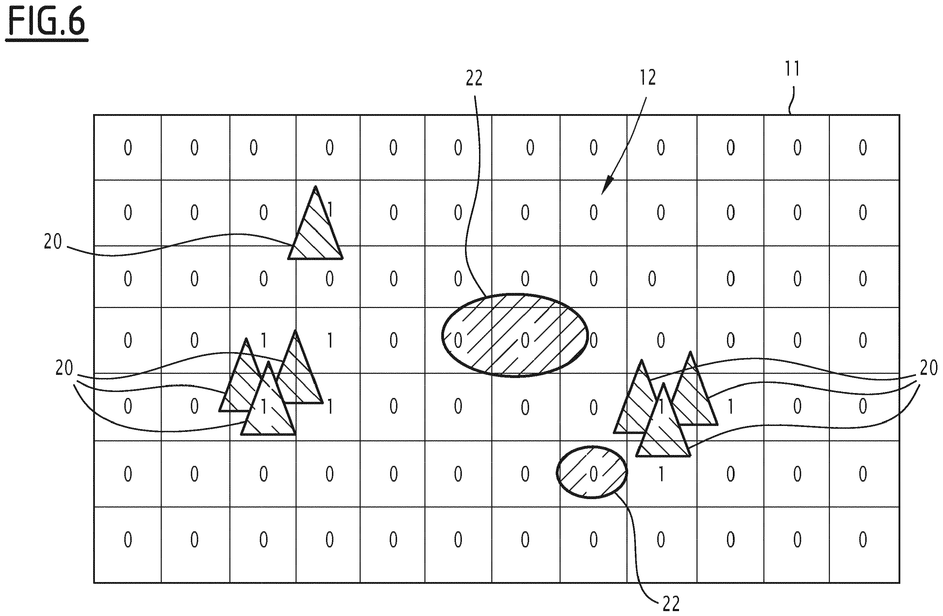

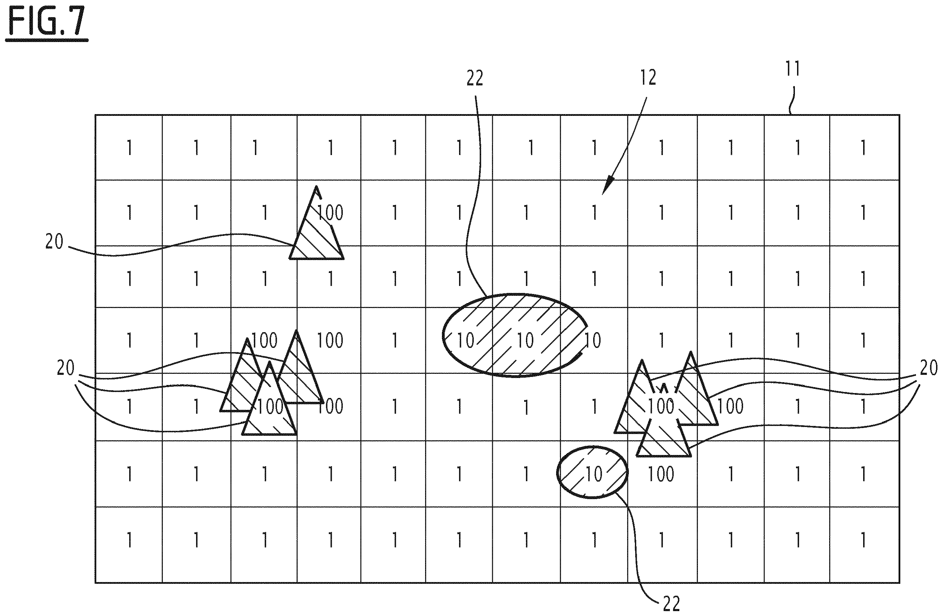

Dans le cas de l'image 11 illustré en figure 1, il est par exemple déterminé une carte de coût des dangers (illustrée en figure 5), une carte de coût des reliefs (illustrée en figure 6) et une carte de coût résultante après agrégation (figure 7). La carte de coût résultante est, par exemple, obtenue par la formule suivante :

$$C = 10 * C_{Danger} + 100 * C_{Relief} + 1 \tag{1}$$

Où:

- C est la matrice de coût résultante,
- C$_{Danger}$ est la matrice de coût des dangers, et
- C$_{Relief}$ est la matrice de coût des reliefs.

L'homme du métier comprendra que pour des questions de représentation, la résolution est faible sur les figures 5 à 7. Elle est en réalité plus forte, de 100 mètres par 100 mètres pour chaque pixel par exemple. L'homme du métier comprendra que pour des raisons de représentation, les cartes des exemples sont en deux dimensions, mais peuvent être étendues en N dimensions suivant l'application dans la limite des ressources matérielles disponibles.

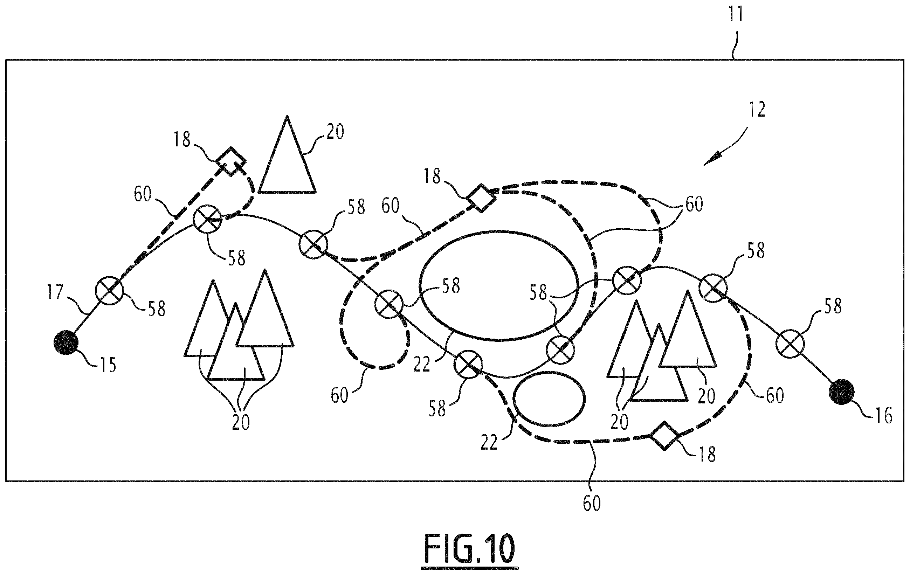

La phase de préparation 90 comprend une étape 130 d'échantillonnage de la trajectoire principale 17 pour obtenir des points de trajectoire 58 (illustrés en figure 10). L'échantillonnage est, par exemple, réalisé avec un pas prédéfini, par exemple, un point tous les 500 mètres.

La phase de préparation 90 comprend une étape 140 de détermination, pour chaque point de déroutement 18, en fonction des valeurs de coût déterminées pour les zones élémentaires, de distances de coût entre le point de déroutement 18 et un ensemble de zones élémentaires de l'image 11. L'ensemble des distances de coût déterminées permet d'obtenir une carte de distances (au sens du coût) pour ledit point de déroutement 18.

L'ensemble de zones élémentaires est, par exemple, choisi de sorte à comprendre les zones de l'espace dans un périmètre déterminé autour du point de déroutement 18. Dans une variante, la carte de distances est calculée pour chaque zone élémentaire de l'image 11.

Avantageusement, la carte de distances de chaque point de déroutement 18 est déterminée par un propagateur Eikonal (algorithme de propagation eikonale).

Un exemple de détermination d'une carte de distances via un propagateur Eikonal est décrit dans ce qui suit dans le cas d'une stratégie de coût bidimensionnel et isotrope.

La méthode de fast-marching a été inventée par James Sethian en 1996. Elle permet de résoudre de façon rapide l'équation aux dérivées partielles suivantes, appelé équation Eikonale :

$$|\nabla u(x)| = 1/f(x) \text{ for } x \in \Omega$$
$$u(x) = 0 \text{ for } x \in \partial\Omega \tag{2}$$

Où:

- $x$ est compris dans un domaine $\Omega$. Dans le cas présent, $x$ est une position du plan, et donc un pixel.
- $\Omega$ est une portion de l'image 11 échantillonnée afin de produire toutes les positions $x$ pour lesquelles une solution $u(x)$ sera calculée. Plus ce maillage est fin, et plus la solution tend à être continue.
- $f(x)$ est une *vitesse* dont il est fourni la valeur en chaque point $x$ de $\Omega$. Dans la suite, la notion de *coût* sera plutôt employée, qui est homogène à l'inverse de $f(x)$, soit $1/f(x)$.
- $u(x)$ est la distance à laquelle se trouve $x$ d'un point de départ donné $x_0$, utilisé pour démarrer la propagation (condition initiale, on parle de SEED).

La donnée de $u(x)$ pour tous les points $x$ de $\Omega$ est appelée carte de distance à $x_0$. Pour trouver le chemin le plus court au sens de $f(x)$, reliant tout point $x_1$ de $\Omega$ au SEED $x_0$, il convient de naviguer au sein de cette carte de coût en suivant en chaque endroit la direction de plus fort gradient. Par exemple, supposons que l'environnement 12 comprend deux types de zones : une zone enneigée et une zone non enneigée. Les pixels de la zone enneigée présentent tous un coût élevé, par exemple 2. Les pixels de la zone non enneigée présentent tous un coût faible, par exemple 1. Ceci signifie que se déplacer dans la zone enneigée demande plus d'effort que se déplacer dans la zone non enneigée. Donc on posera :

$$c(x) = 1/f(x) = 2 \text{ } si \text{ } x \text{ } au \text{ } au \text{ } sein \text{ } de \text{ } la \text{ } zone \text{ } enneigée$$

$$c(x) = 1/f(x) = 1 \text{ } si \text{ } x \text{ } au \text{ } au \text{ } sein \text{ } de \text{ } la \text{ } zone \text{ } non \text{ } enneigée$$

Il s'agit de la stratégie de coût appliquée.

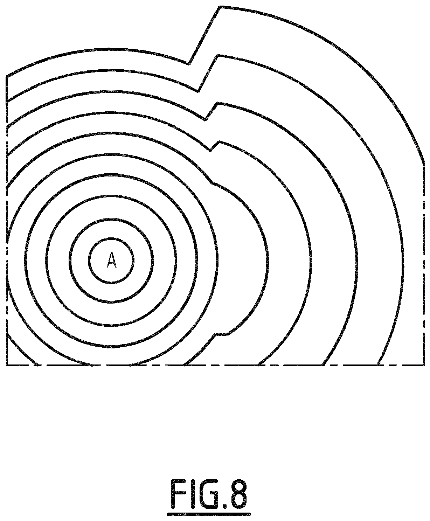

Comme illustré par la figure 8, la carte de distance $u(x)$ est obtenue en propageant l'équation eikonale depuis le point A. Cette carte de distance est matérialisée par des courbes de niveau. Les courbes de niveau figurent des points situés à même distance de A au sens du coût c(x).

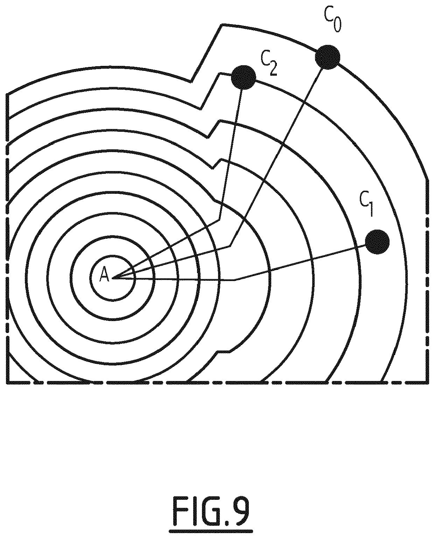

Comme illustré par la figure 9, la trajectoire optimale reliant tout point C de la zone à A se déduit du gradient local. Concrètement, c'est en se déplaçant perpendiculairement aux courbes de niveau que l'on minimisera le « coût » nécessaire pour aller d'un point C quelconque au point A (ceci revient à franchir perpendiculairement les lignes de niveau). La figure 9 illustre ce principe avec trois positions $C_0$, $C_1$ et $C_2$.

L'homme du métier comprendra que cet exemple se généralise à tout propagateur eikonal, qu'il soit isotrope ou anisotrope. Les équations et algorithmes mis en jeu ne sont pas exactement les mêmes que dans le cas du fast-marching détaillé plus haut, toutefois le principe reste fondamentalement similaire : génération d'une carte de distance, et déduction des trajectoires entre tout pixel et le SEED.

De manière plus générale, l'homme du métier comprendra que l'étape de détermination 140 est susceptible d'être mise en oeuvre avec tout algorithme permettant de calculer une route à coût minimal entre deux points (la propagation eikonale étant choisie ici pour ces bonnes propriétés de performance et de généralisation isotropie/anisotropie).

La phase de préparation 90 comprend une étape 150 de détermination, pour chaque point de déroutement 18 et chaque point de trajectoire 58 compris dans l'ensemble de zones élémentaires, de la trajectoire de coût minimal, dite trajectoire de déroutement, reliant ledit point de déroutement 18 audit point de trajectoire 58. Une telle étape de détermination 150 est mise en oeuvre en fonction de la carte de distances obtenue pour ledit point de déroutement 18.

Ainsi, il est déterminé au plus une trajectoire de déroutement entre un point de trajectoire 58 et un point de déroutement 18. Les trajectoires de déroutement obtenues sont, par exemple, mémorisées dans une mémoire 44 de l'installation électronique 26, par exemple, en vue d'être chargée ultérieurement lors de la phase d'exploitation 190 de l'aéronef 14. Le pilote aura, ainsi, un indicateur du nombre de trajectoires de déroutement présentes sur son trajet et de la manière de les atteindre.

La phase d'exploitation 190 est une phase au cours de laquelle l'aéronef 14 survole l'environnement en suivant au moins en partie la trajectoire principale 17.

La phase d'exploitation 190 comprend une étape 200 de détermination en temps réel (à chaque instant) de la position de l'aéronef 14. La position de l'aéronef 14 est, par exemple, obtenue en fonction de mesures effectuées par un ou des capteurs localisés sur l'aéronef 14 ou au moyen de données en provenance d'un système au sol.

La phase d'exploitation 190 comprend une étape 210 d'affichage, sur un afficheur (par exemple l'afficheur 52 de l'installation électronique 26), d'une image 11 de l'environnement 12 survolé par l'aéronef 14, une représentation des éléments suivants ayant été ajoutée sur l'image 11 affichée :

- la trajectoire principale de l'aéronef 14 (au moins en partie),
- un ou plusieurs des points de déroutement 18 ajouté(s) en fonction de la position du ou desdits points de déroulement 18 par rapport à la position de l'aéronef 14 déterminée en temps réel, et
- la trajectoire de déroutement 60 déterminée entre chaque point de déroutement 18 représenté sur l'image 11 et le point de trajectoire 58 le plus proche dans le sens de vol de l'aéronef 14 de la position de l'aéronef 14 déterminée en temps réel.

En particulier, les points de déroutement 18 affichés sont, par exemple, les N points de déroutement 18 dont la distance-coût au point de trajectoire 58 le plus proche dans le sens de vol de l'aéronef de la position de l'aéronef 14 est la plus faible. N est un entier supérieur ou égal à un.

Avantageusement, l'étape d'affichage 210 comprend le classement en temps réel des points de déroutement 18 par ordre croissant de la distance-coût entre chaque point de déroutement 18 et le point de trajectoire 58 le plus proche dans le sens de vol de l'aéronef de la position de l'aéronef 14 déterminée en temps réel. Ainsi, cela permet de déterminer s'il vaut mieux prendre un point de déroutement 18 plutôt qu'un autre. Le classement est, par exemple, indiqué sur l'image 11 affichée.

Avantageusement, pour chaque point de déroutement 18, l'étape d'affichage 210 comprend le classement des trajectoires optimales déterminées (obtenues à partir de points de trajectoire 58 différents) par ordre de coût croissant. Le classement est, par exemple, indiqué sur l'image 11 affichée.

Un exemple d'image 11 affichée sur un afficheur dans l'aéronef 14 est, par exemple, illustrée sur la figure 10. Les trajectoires de déroutement représentées sur l'image 11 sont référencées par la référence 60.

La phase d'exploitation 190 comprend une étape 220 de déroutement de l'aéronef en dehors de la trajectoire principale, en fonction des trajectoires de déroutement 60 représentées sur l'image 11 affichée par l'afficheur. L'étape de déroutement 220 induit donc une modification de la trajectoire suivie par l'aéronef 14, par exemple, lorsqu'un imprévu (dangers notamment) est présent sur la trajectoire principale 17 de l'aéronef 14. L'étape de déroutement 220 vise à mettre l'aéronef 14 en sécurité. L'étape 220 est, par exemple, mise en oeuvre par le pilote en fonction des trajectoires de déroutement représentées sur l'image 11 affichée sur l'afficheur.

Avantageusement, en changeant la stratégie d'agrégation des cartes de coût unitaire, la carte de coût résultante ne sera pas la même et donc les routes de déroutement seront différentes, ce qui permet d'adresser encore d'autres alternatives de déroutement.

Ainsi, le présent procédé permet d'assister les pilotes dans leurs prises de décision sur leurs navigations grâce à une anticipation des routes de déroutement permettant de rejoindre des zones sûres atteignables dans le cas où le pilote se retrouve confronté à un imprévu. Ainsi, avantageusement, en vol, lors de la survenue d'un imprévu (danger, météo...), la trajectoire principale de l'aéronef est modifiée vers un point de déroutement en fonction des trajectoires optimales de détournement déterminées.

En particulier, les éléments suivants permettent d'aider le pilote à savoir : un indicateur du nombre de routes d'échappement disponibles (vers une zone « de sécurité ») tout au long de la trajectoire et une liste des zones « de sécurité » atteignables via des routes d'échappement et ordonnées selon le « coût » nécessaire pour les atteindre, et ce sur chaque point échantillonné de la trajectoire.

En particulier, les trajectoires de déroutement déterminées permettent d'aider le pilote aussi bien durant la phase de préparation de mission que pendant la phase de vol. De telles trajectoires fournissent au pilote une meilleure conscience des options disponibles.

Ainsi, le présent procédé permet d'améliorer la prise de décision d'un pilote face à des situations imprévues.

L'homme du métier comprendra que les modes de réalisation décrits précédemment sont susceptibles d'être combinés entre eux lorsqu'une telle combinaison est compatible et que les applications décrites sont données à titre d'exemple.

Notamment, le présent procédé est applicable pour la recherche d'urgence de routes vers des zones d'atterrissage (aéroports, aérodromes) ou pour des missions d'intervention ou de secours en montagne, ainsi que toute mission associée à la gestion de trajectoires dans des environnements hostiles (météo, vents).

## Revendications

1. Procédé de détermination de trajectoires de déroutement (60) d'un aéronef (14) par rapport à une trajectoire principale (17) définie pour l'aéronef (14) dans un environnement (12), le procédé étant mis en oeuvre par une installation électronique (26), le procédé comprenant une phase de préparation comprenant les étapes suivantes :

   a. l'obtention d'une image (11) de l'environnement (12) destiné à être survolé par l'aéronef (14) entre un point de départ (15) et un point d'arrivée (16), une représentation des éléments suivants ayant été ajoutée sur l'image (11) :

      i. une trajectoire principale (17) destinée à être parcourue par l'aéronef (14) entre le point de départ (15) et le point d'arrivée (16),
      ii. au moins un point de déroutement (18) de l'aéronef (14) en dehors de la trajectoire principale (17), chaque point de déroutement (18) étant un point de l'environnement (12) à l'écart de la trajectoire principale (17) et donnant accès à une zone de sécurité, une zone de sécurité étant une zone à l'écart d'un danger potentiel identifié le long de la trajectoire principale (17),

   b. le maillage de l'image (11) en zones élémentaires,
   c. la détermination, pour chaque zone élémentaire de l'image (11), d'une valeur de coût en fonction d'au moins un critère de coût, le au moins un critère de coût étant relatif au survol de l'environnement (12) par l'aéronef (14),
   d. l'échantillonnage de la trajectoire principale (17) pour obtenir des points de trajectoire (58), et
   e. pour chaque point de déroutement (18),

      i. la détermination, en fonction des valeurs de coût déterminées pour les zones élémentaires, de distances de coût entre le point de déroutement (18) et un ensemble de zones élémentaires de l'image (11) pour obtenir une carte de distances,

   pour chaque point de trajectoire (58) compris dans l'ensemble de zones élémentaires, la détermination, en fonction de la carte de distances, de la trajectoire de coût minimal reliant ledit point de trajectoire (58) au point de déroutement (18), la trajectoire déterminée étant appelée trajectoire de déroutement (60), le procédé comprenant une phase d'exploitation au cours de laquelle l'aéronef (14) survole l'environnement (12) en suivant initialement la trajectoire principale (17), la phase d'exploitation comprenant :

   a. la détermination en temps réel de la position de l'aéronef (14), et

b. l'affichage, sur un afficheur (52), d'une image (11) de l'environnement (12) survolé par l'aéronef (14), une représentation des éléments suivants ayant été ajoutée sur l'image (11) affichée :

i. la trajectoire principale (17) de l'aéronef (14),
ii. un ou plusieurs des points de déroutement (18), lesdits points de déroutement (18) ajouté(s) étant fonction de la position du ou desdits points de déroulement (18) par rapport à la position de l'aéronef (14) déterminée en temps réel, et
iii. la trajectoire de déroutement (60) déterminée entre chaque point de déroutement (18) représenté sur l'image (11) et le point de trajectoire (58) le plus proche dans le sens du vol de l'aéronef (14) de la position de l'aéronef (14) déterminée en temps réel.

2. Procédé selon la revendication 1, dans lequel la phase d'exploitation comprend une étape de déroutement de l'aéronef (14) en dehors de la trajectoire principale (17), en fonction des trajectoires de déroutement (60) représentées sur l'image (11) affichée par l'afficheur (52).

3. Procédé selon la revendication 1 ou 2, dans lequel l'étape d'affichage comprend le classement en temps réel des points de déroutement (18) par ordre croissant de la distance-coût entre chaque point de déroutement (18) et le point de trajectoire (58) le plus proche dans le sens du vol de l'aéronef (14) de la position de l'aéronef (14) déterminée en temps réel, le classement étant indiqué sur l'image (11) affichée.

4. Procédé selon l'une quelconque des revendications 1 à 3, dans lequel la détermination d'une valeur de coût pour chaque zone élémentaire est effectuée en fonction de plusieurs critères de coût, ladite étape de détermination comprenant pour chaque zone élémentaire:

a. la détermination d'une valeur intermédiaire de coût pour chaque critère de coût, et
b. la combinaison linéaire des valeurs intermédiaires de coût déterminées pour obtenir la valeur de coût de la zone élémentaire.

5. Procédé selon l'une quelconque des revendications 1 à 4, dans lequel l'environnement (12) comprend au moins une zone de relief (20) et/ou au moins une zone de danger (22) et/ou au moins une zone d'intervisibilité pour un capteur et/ou au moins une zone de météo défavorable et/ou au moins une zone urbaine, le ou au moins un critère de coût étant choisi dans la liste constituée de :

a. un critère d'évitement des zones de relief (20) par l'aéronef (14),
b. un critère d'évitement des zones de danger (22) par l'aéronef (14),
c. un critère d'évitement des zones d'intervisibilité d'un capteur par l'aéronef (14),
d. un critère d'évitement des zones de météo défavorable par l'aéronef (14), et
e. un critère d'évitement des zones urbaines par l'aéronef (14).

6. Procédé selon l'une quelconque des revendications 1 à 5, dans lequel la carte de distances de chaque point de déroutement (18) est déterminée par un algorithme de propagation Eikonale.

7. Procédé selon l'une quelconque des revendications 1 à 6, dans lequel, lors de l'étape d'obtention, l'image (11) de l'environnement (12) est obtenue par l'intermédiaire de mesures effectuée par un capteur, tel qu'une caméra ou un satellite.

8. Installation électronique (26) configurée pour mettre en oeuvre un procédé de détermination selon l'une quelconque des revendications 1 à 7.

9. Aéronef (14) comprenant une installation électronique (26) selon la revendication 8.

**Patentansprüche**

1. Verfahren zur Bestimmung von Ausweichflugbahnen (60) eines Luftfahrzeugs (14) in Bezug auf eine Hauptflugbahn (17), die für das Luftfahrzeug (14) in einer Umgebung (12) definiert ist, wobei das Verfahren von einer elektronischen Anlage (26) durchgeführt wird, das Verfahren umfassend eine Vorbereitungsphase, umfassend die folgenden Schritte:

**a.** Erlangen eines Bilds (11) der Umgebung (12), die dazu bestimmt ist, um von dem Luftfahrzeug (14) zwischen einem Startpunkt (15) und einem Zielpunkt (16) überflogen zu werden, wobei eine Darstellung der folgenden Elemente auf dem Bild (11) hinzugefügt wurde:

> **i.** eine Hauptflugbahn (17), die dazu bestimmt ist, um von dem Luftfahrzeug (14) zwischen dem Startpunkt (15) und dem Zielpunkt (16) zurückgelegt zu werden,
> **ii.** mindestens einen Ausweichpunkt (18) des Luftfahrzeugs (14) von der Hauptflugbahn (17), wobei jeder Ausweichpunkt (18) ein Punkt in der Umgebung (12) ist, der von der Hauptflugbahn (17) entfernt ist und Zugang zu einem Sicherheitsbereich bietet, wobei ein Sicherheitsbereich ein Bereich ist, der von einer identifizierten potenziellen Gefahr entlang der Hauptflugbahn (17) entfernt ist,

**b.** die Vernetzung des Bilds (11) in elementare Bereiche,
**c.** Bestimmen, für jeden Elementarbereich des Bilds (11), eines Kostenwerts abhängig von mindestens einem Kostenkriterium, wobei sich das mindestens eine Kostenkriterium auf das Überfliegen der Umgebung (12) durch das Luftfahrzeug (14) bezieht,
**d.** Abtasten der Hauptflugbahn (17), um Flugbahnpunkte (58) zu erlangen, und
**e.** für jeden Ausweichpunkt (18),

> **i.** Bestimmen von Kostenabständen zwischen dem Ausweichpunkt (18) und einem Satz von Elementarbereichen des Bilds (11) basierend auf den für die Elementarbereiche bestimmten Kostenwerten, um eine Abstandskarte zu erlangen,

für jeden Flugbahnpunkt (58), der in dem Satz von Elementarzonen enthalten ist, Bestimmen, abhängig von der Abstandskarte, der Flugbahn mit minimalen Kosten, die den Flugbahnpunkt (58) mit dem Ausweichpunkt (18) verbindet, wobei die bestimmte Flugbahn Ausweichflugbahn (60) genannt wird, wobei das Verfahren eine Betriebsphase umfasst, in der das Luftfahrzeug (14) die Umgebung (12) überfliegt, indem es anfänglich der Hauptflugbahn (17) folgt, die Betriebsphase umfassend:

> a. die Bestimmung der Position des Luftfahrzeugs (14) in Echtzeit, und
> b. Anzeigen, auf einer Anzeige (52), eines Bilds (11) der Umgebung (12), die von dem Luftfahrzeug (14) überflogen wird, wobei eine Darstellung der folgenden Elemente zu dem angezeigten Bild (11) hinzugefügt wurde:

>> i. die Hauptflugbahn (17) des Luftfahrzeugs (14),
>> ii. einen oder mehrere der Ausweichpunkte (18), wobei die hinzugefügten Ausweichpunkte (18) von der Position des oder der Ausweichpunkte (18) in Bezug auf die in Echtzeit bestimmten Position des Luftfahrzeugs (14) abhängen, und
>> iii. die Ausweichflugbahn (60), die zwischen jedem auf dem Bild (11) dargestellten Ausweichpunkt (18) und dem in Flugrichtung des Flugzeugs (14) nächstgelegenen Flugbahnpunkt (58) der in Echtzeit bestimmten Position des Flugzeugs (14) bestimmt wird.

2. Verfahren nach Anspruch 1, wobei die Betriebsphase einen Schritt umfasst, bei dem das Luftfahrzeug (14) aus der Hauptflugbahn (17) herausgelenkt wird, abhängig von den Ausweichflugbahnen (60), die auf dem von der Anzeige (52) angezeigten Bild (11) dargestellt sind.

3. Verfahren nach Anspruch 1 oder 2, wobei der Anzeigeschritt eine Klassifizierung in Echtzeit der Ausweichpunkte (18) in aufsteigender Reihenfolge der Kosten-Distanz zwischen jedem Ausweichpunkt (18) und dem in Flugrichtung des Luftfahrzeugs (14) nächstgelegenen Flugbahnpunkt (58) der in Echtzeit bestimmten Position des Luftfahrzeugs (14) umfasst, wobei die Klassifizierung auf dem angezeigten Bild (11) angezeigt wird.

4. Verfahren nach einem der Ansprüche 1 bis 3, wobei die Bestimmung eines Kostenwerts für jeden Elementarbereich abhängig von mehreren Kostenkriterien erfolgt, der Bestimmungsschritt umfassend für jeden Elementarbereich:

> a. die Bestimmung eines Kostenzwischenwerts für jedes Kostenkriterium und
> b. die Linearkombination der bestimmten Kostenzwischenwerte, um den Kostenwert des Elementarbereichs zu erlangen.

5. Verfahren nach einem der Ansprüche 1 bis 4, wobei die Umgebung (12) mindestens einen Reliefbereich (20) und/oder mindestens einen Gefahrenbereich (22) und/oder mindestens einen Bereich, der für einen Sensor nicht einsehbar ist, und/oder mindestens einen Bereich mit ungünstigem Wetter und/oder mindestens einen städtischen Bereich umfasst, wobei das oder mindestens ein Kostenkriterium ausgewählt ist aus der Liste, bestehend aus:

> a. ein Kriterium für das Vermeiden von Reliefbereichen (20) durch das Luftfahrzeug (14),
> b. ein Kriterium für die Vermeidung von Gefahrenzonen (22) durch das Luftfahrzeug (14),
> c. ein Kriterium für die Vermeidung von Bereichen, die für einen Sensor nicht einsehbar sind, durch das Luftfahrzeug (14),
> d. ein Kriterium zur Vermeidung von Schlechtwettergebieten durch das Luftfahrzeug (14), und
> e. ein Kriterium für das Vermeiden von städtischen Gebieten durch das Luftfahrzeug (14).

6. Verfahren nach einem der Ansprüche 1 bis 5, wobei die Entfernungskarte von jedem Ausweichpunkt (18) durch einen Eikonale-Ausbreitungsalgorithmus bestimmt wird.

7. Verfahren nach einem der Ansprüche 1 bis 6, wobei bei dem Erlangungsschritt das Bild (11) der Umgebung (12) durch Messungen erlangt wird, die von einem Sensor, wie beispielsweise einer Kamera oder einem Satelliten, durchgeführt werden.

8. Elektronische Anlage (26), die konfiguriert ist, um ein Bestimmungsverfahren nach einem der Ansprüche 1 bis 7 durchzuführen.

9. Luftfahrzeug (14), umfassend eine elektronische Anlage (26) nach Anspruch 8.

**Claims**

1. A method for determining diversion trajectories (60) for an aircraft (14) relative to a main trajectory (17) defined for the aircraft (14) in an environment (12), the method being implemented by an electronic installation (26), the method comprising a preparation phase comprising the following steps:

> a. obtaining an image (11) of the environment (12) intended to be overflown by the aircraft (14) between a departure point (15) and an arrival point (16), a representation of the following elements having been added to the image (11):
>
> > i. a main trajectory (17) intended to be travelled by the aircraft (14) between the departure point (15) and the arrival point (16),
> > ii. at least one point of diversion (18) of the aircraft (14) away from the main trajectory (17), each point of diversion (18) being a point in the environment (12) away from the main trajectory (17) and giving access to a safety zone, a safety zone being a zone away from a potential danger identified along the main trajectory (17),
>
> b. meshing the image (11) into elementary zones,
> c. determining, for each elementary zone of the image (11), a cost value as a function of at least one cost criterion, the at least one cost criterion relating to the overflight of the environment (12) by the aircraft (14),
> d. sampling the main trajectory (17) to obtain trajectory points (58), and
> e. for each diversion point (18),
>
> > i. determining, as a function of the cost values determined for the elementary zones, cost distances between the diversion point (18) and a set of elementary zones of the image (11) in order to obtain a distance map,
>
> for each trajectory point (58) included in the set of elementary zones, determining, as a function of the distance map, the minimum cost trajectory linking the said trajectory point (58) to the diversion point (18), the trajectory determined being called the diversion trajectory (60), the method comprising an operating phase during which the aircraft (14) flies over the environment (12) initially following the main trajectory (17), the operating phase comprising:
>
> > a. real-time determination of the position of the aircraft (14), and
> > b. displaying, on a display (52), an image (11) of the environment (12) overflown by the aircraft (14), a representation of the following elements having been added to the image (11) displayed:

i. the main trajectory (17) of the aircraft (14),

ii. one or more diversion points (18), said added diversion point(s) (18) being a function of the position of said diversion point(s) (18) relative to the position of the aircraft (14) determined in real time, and

iii. the diversion trajectory (60) determined between each diversion point (18) represented on the image (11) and the trajectory point (58) closest in the direction of flight of the aircraft (14) to the position of the aircraft (14) determined in real time.

2. A method according to claim 1, in which the operating phase comprises a step of diverting the aircraft (14) away from the main trajectory (17), as a function of the diversion trajectories (60) represented on the image (11) displayed by the display (52).

3. A method according to claim 1 or 2, in which the display step comprises ranking in real time the diversion points (18) in ascending order of the distance-cost between each diversion point (18) and the trajectory point (58) closest in the direction of flight of the aircraft (14) to the position of the aircraft (14) determined in real time, the ranking being indicated on the image (11) displayed.

4. A method according to any one of claims 1 to 3, in which the determination of a cost value for each elementary zone is carried out as a function of several cost criteria, said determination step comprising for each elementary zone:

a. the determination of an intermediate cost value for each cost criterion, and

b. the linear combination of the intermediate cost values determined to obtain the cost value of the elementary zone.

5. A method according to any one of claims 1 to 4, in which the environment (12) comprises at least one area of relief (20) and/or at least one area of danger (22) and/or at least one area of intervisibility for a sensor and/or at least one adverse weather zone and/or at least one urban zone, the or at least one cost criterion being selected from the list consisting of:

a. a criterion for the aircraft (14) to avoid terrain zones (20),

b. a criterion for avoidance of danger zones (22) by the aircraft (14),

c. a criterion for avoiding zones of intervisibility of a sensor by the aircraft (14),

d. a criterion for the aircraft (14) to avoid unfavourable weather zones, and

e. a criterion for the avoidance of urban areas by the aircraft (14).

6. A method according to any one of claims 1 to 5, wherein the distance map of each diversion point (18) is determined by an Eikonal propagation algorithm.

7. A method according to any one of claims 1 to 6, in which, during the obtaining step, the image (11) of the environment (12) is obtained by means of measurements made by a sensor, such as a camera or a satellite.

8. Electronic installation (26) configured to implement a determination method according to any one of claims 1 to 7.

9. An aircraft (14) comprising an electronic installation (26) according to claim 8.

FIG.1

26

42

44

46

52

48

40

50

29

# FIG.2

FIG.3

FIG.4

# FIG.5

EP 3 933 810 B1

# FIG.6

EP 3 933 810 B1

# FIG.7

FIG.8

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018366011 A

- EP 3594870 A